# EUROPÄISCHE PATENTANMELDUNG

(11) **EP 1 983 720 A1**
(43) Veröffentlichungstag der Anmeldung: **22.10.2008**
(21) Anmeldenummer: 08102947.2
(22) Anmeldetag: 27.03.2008
(51) Int. Cl.: H04L 29/06

(54) **Verfahren und Einrichtung zur Reduktion der Datenmenge in einem paketorientiertem Datennetz**

(30) Priorität: 20.04.2007 DE 102007018832
(71) Anmelder: Siemens AG Österreich, 1210 Wien (AT)
(72) Erfinder: zum Felde, Ingo, 21256, Handeloh (DE); Sluschny, Thomas, 21220, Seevental (DE)
(74) Vertreter: Maier, Daniel Oliver

(57) **Zusammenfassung**

Die Erfindung betrifft ein Verfahren zur Übertragung von Daten in einem paketorientierten Datenübertragungsnetz, bestehend aus mindestens zwei Datenendgeräten, wobei innerhalb der Datenendgeräte eine Datenübertragung zwischen Dienstanwendungen und einer Transportsteueranwendung mittels eines ersten Transportprotokolls geschieht und für eine Datenverbindung zwischen zwei Datenendgeräten ein zweites Transportprotokoll verwendet wird, wobei die Steuer- und Adressierungsinformation des ersten Transportprotokolls als Nutzinformation des zweiten Transportprotokolls übertragen wird.

Dadurch ist der Vorteil erzielbar, dass die Steuer- und Adressierungsinformation des ersten Protokolls für jeden Verbindungsvorgang nur einmal übertragen werden muss.

## Beschreibung

### Technisches Gebiet

Die Erfindung betrifft ein Verfahren zur Reduktion der zu übertragenden Datenmenge in einem paketorientiertem Datennetz und eine Einrichtung zur Durchführung des Verfahrens.

### Stand der Technik

Das sogenannte "Internet Protokoll" (IP) ist als Transportprotokoll in Datennetzen, sowohl in drahtgebundenen als auch drahtlosen Netzen weit verbreitet. Ein Transportprotokoll bildet die genaue Vereinbarung zwischen zwei oder mehreren Computern, wie Daten zwischen diesen Computern ausgetauscht werden sollen.

Diese Vereinbarungen bestehen aus Regeln und Formaten die das Kommunikationsverhalten der an der Datenübertragung beteiligten Computer regeln.

Die Aufgaben von Transportprotokollen sind unter anderem der sichere Datenverbindungsaufbau zwischen den an der Kommunikation beteiligten Computern (Datenendgeräten), das Sicherstellen der fehlerfreien Übertragung z.B. mittels einer Prüfsumme, das wiederholte Senden von Daten welche auf dem Übertragungsweg verloren gegangen sind.

Eine weitere Aufgabe von Transportprotokollen ist das Verschlüsseln von Daten für den Fall, dass Eingriffe Dritter verhindert werden müssen.

Bei aus dem Stand der Technik bekannten Protokollen werden der Nutzinformation weitere Informationen (Steuer- und Adressierungsinformation, im Allgemeinen "Header" genannt) zugefügt und gemeinsam mit diesen transportiert. Solche Datenübertragungsverfahren werden "Paketorientierte Datenübertragungsverfahren" genannt. Typischerweise werden als Steuer- und Adressierungsinformation Informationen über den Absender und den gewünschten Adressaten, die zu übertragende Datenmenge, Prüfsummen zur Erkennung von Übertragungsfehlern und die Art der zu Übertragenden Daten z.B. Daten für den Verbindungsaufbau oder Nutzdaten übertragen.

Diese zusätzlich übertragenen Steuer- und Adressierungsinformationen haben zur Folge, dass das Verhältnis der Mengen an übertragenen Nutzdaten und Steuer- und Adressierungsinformation verschlechtert wird. Dies ist besonders in Anwendungsfällen nachteilig, in welchen häufig geringe Mengen an Nutzdaten übertragen werden, da die Menge an Steuer- und Adressierungsinformation im Allgemeinen je Datenübertragung konstant ist. Beispielsweise sind Sprachdatenübertragungen über IP (Internet Protokoll) von diesem Phänomen besonders betroffen.

In Anwendungsfällen, in welchen zur Datenübertragung ein Übertragungskanal mit geringer Kapazität eingesetzt wird, oder besonders viele Datenendgeräte an das Datennetz angeschlossen sind kann das hohe Aufkommen an Steuer- und Adressierungsinformationen den Datenverkehr verlangsamen. Zur Lösung dieses Problems wurden Verfahren entwickelt, welche die Menge an zu übertragenden Steuer- und Adressierungsinformationen reduzieren. Solche Verfahren sind als sogenannte "Header Compression" Verfahren bekannt. Ein bekanntes Verfahren ist das "IETF ROHC" Verfahren (Internet Engineering Task Force - Robust Header Compression). Beispielsweise wird in US2004/0264433 die Verwendung dieses IETF ROHC Verfahrens in einem drahtlosen Kommunikationsnetz vorgeschlagen.
US2007/0086434 empfiehlt die Verwendung eines Header Compression Verfahrens, welches für den Einsatz in drahtlosen Netzwerken vorgesehen ist und die Menge an Steuer- und Adressierungsinformation immer konstant ist.
Ein weiters Verfahren zur Reduktion der Menge an Steuer- und Adressierungsinformationen wird in EP1239643 vorgeschlagen. In diesem Dokument wird ein Verfahren, welches die Anzahl gleichzeitig über ein IP-Netz übertragbarer Sprachverbindungen erhöht, vorgeschlagen.

### Darstellung der Erfindung

Der Erfindung liegt daher die Aufgabe zugrunde, die zu übertragende Datenmenge in einem Datennetz zu reduzieren.

Die Aufgabe wird durch ein Verfahren mit den Merkmalen des Anspruchs 1 gelöst. Vorteilhafte Ausgestaltungen sind Gegenstand von abhängigen Ansprüchen.

Dem Grundgedanken der Erfindung zufolge können die in den Datenendgeräten ablaufenden Dienstanwendungen (Applikationen) mittels eines ersten Transportprotokolls mit beliebigen anderen, an das Datennetz angeschlossenen Datenendgeräten kommunizieren. Dieses erste Transportprotokoll stellt die zu übertragenden Daten zu Datenpaketen, bestehend aus Steuer- und Adressierungsinformationen (Header) und Nutzinformationen zusammen. Diese Steuer- und Adressierungsinformation (Header) enthält Informationen über den Adressaten der Nutzdaten, beispielsweise an welche Dienstanwendung welches anderen Datenendgeräts die das jeweilige Datenpaket zugestellt werden muss.
Für die in den Datenendgeräten eingesetzten Dienstanwendungen soll die Art der Datenübertragung zu anderen Datenendgeräten unerheblich sein und seitens der Dienstanwendungen keinerlei Änderungen oder Anpassungen bedürfen.

Erfindungsgemäß wird das erste Transportprotokoll mittels einer Transportsteueranwendung auf ein zweites Transportprotokoll umgesetzt, wobei die Dienstanwendungen von dieser Umsetzung in ihrem Kommunikationsverhalten mit anderen Dienstanwendungen, welche auf anderen Datenendgeräten installiert sind, nicht beeinträchtigt sind.

Der Einsatz eines ersten Transportprotokolls ist vorteilhaft, da durch geeignete Wahl eines ersten Transportprotokolls Standardapplikationen als Dienstanwendungen, die auf diesen Protokollen beruhen, eingesetzt werden können und somit z.B. Kosten für die Entwicklung spezieller Applikationen gespart werden können. Beispielweise existieren Applikationen für Sprachübertragungen, welche auf dem weit verbreiteten Internet Protokoll basieren.
Als Dienstanwendungen sind alle auf Datenendgeräten ablaufenden Anwendungen zu sehen, welche Kommunikationsbedarf zu anderen Datenendgeräten aufweisen, beispielsweise auch Videoübertragungsanwendungen, Textübertragungsanwendungen, Fernsteueranwendungen, etc.

Das Grundprinzip des erfindungsgemäßen Verfahrens besteht darin, die Steuer- und Adressierungsinformation (Header) des ersten Transportprotokolls nur einmal, beim Aufbau einer Verbindung von einem Datenendgerät zu einem anderen, über das Transportmedium zu leiten. Bei diesem Verbindungsaufbau wird die Steuer- und Adressierungsinformation (Header) des ersten Transportprotokolls als Nutzdaten des zweiten Protokolls übertragen, wobei in diesem Fall in der Steuer- und Adressierungsinformation (Header) des zweiten Transportprotokolls die Information enthalten ist, dass die in diesem Datenpaket übertragenen Nutzdaten die Steuer- und Adressierungsinformation (Header) des ersten Transportprotokolls sind. Die Nutzdaten des ersten Transportprotokolls werden von der Transportsteueranwendung zu Datenpaketen gemäß dem Syntax des zweiten Transportprotokolls zusammengestellt, wobei die Steuer- und Adressierungsinformation (Header) des zweiten Transportprotokolls die Information enthält, dass in diesem Datenpaket Nutzdaten des ersten Transportprotokolls enthalten sind.

Die im empfangenden Datenendgerät ablaufende Transportsteueranwendung analysiert jedes empfangene Datenpaket und speichert im Fall, das die Nutzdaten des empfangenen Datenpakets die Steuer- und Adressierungsinformation (Header) des ersten Transportprotokolls enthalten, diese Steuer- und Adressierungsinformation (Header) des ersten Transportprotokolls, ab.

Die im empfangenden Datenendgerät ablaufende Transportsteueranwendung erstellt aus der gespeicherten Steuer- und Adressierungsinformation (Header) des ersten Transportprotokolls und den in weiteren Datenpaketen dieser Verbindung empfangenen Nutzdaten Datenpakete, welche nach dem Syntax des ersten Transportprotokolls aufgebaut sind und stellt diese Datenpakte der Dienstanwendungen, die in der Steuer- und Adressierungsinformation (Header) des ersten Transportprotokolls als Empfänger genannt ist, zu.

Dadurch wird der Vorteil erreicht, dass die Menge an Daten, welche über das Transportmedium geleitet wird, deutlich geringer ist, als wenn das erste Transportprotokoll direkt zur Datenkommunikation verwendet werden würde.
Ebenso vorteilhaft ist, das die eingesetzten Dienstanwendungen nicht an das zweite Transportprotokoll angepasst werden müssen, somit können beispielsweise frei verfügbare ("Public Domain" oder "Open Source") Dienstanwendungen unverändert eingesetzt werden, da diese sehr häufig standardisierte Transportprotokolle, z. B. das "Internet Protokoll" verwenden.

Eine vorteilhafte Ausgestaltung dieser Erfindung sieht den Einsatz des erfindungsgemäßen Verfahrens in einem Ringnetz vor. Dabei sind alle Datenendgeräte mit zwei Schnittstellen ausgestattet, welche jeweils mittels eines Transportmediums mit einem anderen Datenendgerät verbunden sind.
Die in diesen Datenendgeräten verwendeten Transportsteueranwendungen analysieren jedes ankommende Datenpaket und senden es im Fall, das die in der Steuer- und Adressierungsinformation (Header) des empfangenen Datenpakets enthaltene Zielinformation ein anderes Datenendgerät anführt, das Datenpaket mittels der jeweils anderen Schnittstelle an das nächste Datenendgerät weiter. Dieser Weiterleitungsvorgang wird so lange wiederholt bis das Datenpaket das Datenendgerät, welches in der Steuer- und Adressierungsinformation (Header) als Ziel genannt wird, erreicht.

Eine weitere vorteilhafte Ausgestaltung der Erfindung sieht vor, die Steuer- und Adressierungsinformation (Header) des zweiten Transportprotokolls mit einer Zählvariable auszustatten, welche bei jeder Weiterleitung durch eine Transportsteueranwendung eines Datenendgerät verändert wird.

Dadurch ist der Vorteil erzielbar, ein Datenpaket, welches nicht an ein Zieldatenendgerät zugestellt werden kann (beispielsweise aufgrund eines Defekts dieses Zieldatenendgeräts oder durch eine fehlerhafte Adressinformation) und deshalb in einem Ringnetz unbegrenzt weitergesendet würde, mit einer Gültigkeitsinformation zu versehen. Dazu empfiehlt es sich, mittels der Transportsteueranwendung die Steuer- und Adressierungsinformation (Header) jedes erstmalig ausgesandten Datenpakets mit einer Zählvariablen zu versehen, welche mit einem Wert, welcher der Anzahl an Datenendgeräten in diesem Ringdatennetz entspricht, zu versehen. Jedes Datenendgerät, dessen Transportsteueranwendung dieses Datenpaket nun in Folge weitersendet dekrementiert den Wert der Zählvariablen. Erreicht der Wert der Zählvariablen den Wert Null, so ist gesichert, dass das Datenpaket das gesamte Ringnetz durchlaufen hat und von keinem Datenendgerät als für dieses Datenendgerät adressiert angenommen hat. Jenes Datenendgerät, welches ein Datenpaket mit einer Zählvariablen mit dem Wert Null empfängt, löscht dieses und leitet es nicht weiter. Somit wird die Übertragungskapazität des Transportmediums von überflüssigem Datenverkehr freigehalten.

Zur Erhöhung der Übertragungssicherheit und zur Verringerung der Zeitverzögerung, welche bei der Analyse der empfangenen Datenpakte in den Transportsteueranwendungen entsteht, empfiehlt es sich die Steuer- und Adressierungsinformation des zweiten Transportprotokolls mit einer Prüfsumme über den Inhalt dieser Steuer- und Adressierungsinformation zu versehen. Ein empfangenes Datenendgerät kann somit bereits nach Analyse der empfangenen Steuer- und Adressierungsinformation eines Datenpakets erkennen ob dieses Datenpaket fehlerfrei ist. Die dabei angewandte Methode der Prüfsummenberechnung ist für die Funktion des Verfahrens unerheblich.

Die Transportsteueranwendung kann beispielsweise mittels Software umgesetzt werden, es ist auch eine Realisierung mittels diskreter Logikbauteile (Hardware) oder mit einer für diesen Zweck vorgesehenen integrierten Schaltung (Application Specific Integrated Circuit ASIC) möglich.

Besonders vorteilhaft ist das erfindungsgemäße Verfahren bei Notrufsäulen, z.B. auf Autobahnen, einsetzbar. Da die Übertragungskapazität des Transportmediums in diesem Anwendungsfall häufig begrenzt ist, und die wesentlichste Dienstanwendung die Übertragung von Sprachinformationen zu leisten hat, ist der Einsatz des erfindungsgemäßen Verfahren von besonderem Vorteil.

In weiterer Ausgestaltung der Erfindung empfiehlt es sich, mindestens eines der Datenendgeräte in besonderer Form auszubilden. Dieses, in besonderer Form ausgebildete Datenendgerät bildet die Notrufzentrale, bei welcher die Notrufe der einzelnen anderen Datengeräte (Notrufsäulen) entgegengenommen werden und welches weitere Dienste, etwa die Übertragung von Textnachrichten an andere Datenendgeräte erbringt.

### Kurzbeschreibung der Zeichnungen

Es zeigen beispielhaft:
- **Fig. 1**: Ringnetz mit 3 Datenendgeräten.
- **Fig. 2**: Ablauf des zweiten Transportprotokolls.
- **Fig. 3**: Datenwort des zweiten Transportprotokolls

### Ausführung der Erfindung

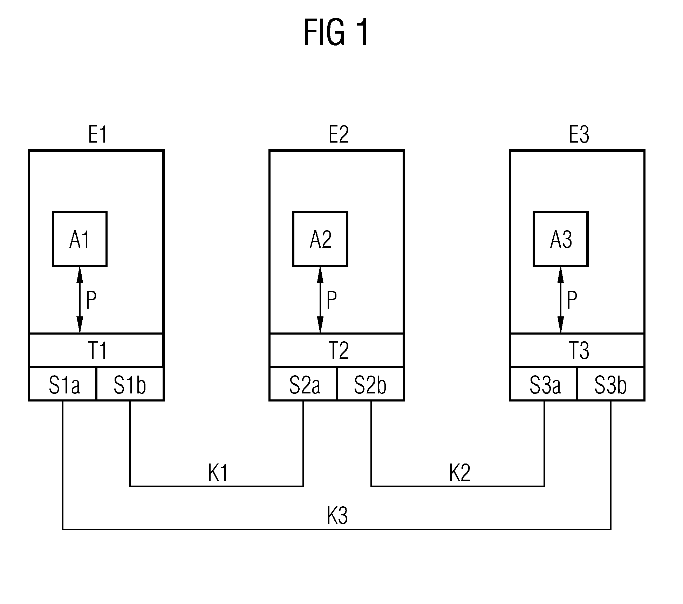

**Fig. 1** zeigt beispielhaft und schematisch die Darstellung eines Ringnetzes mit 3 Datenendgeräten am Beispiel von Notrufsäulen aus Autobahnen. Dabei ist die erforderliche Notrufzentrale nicht abgebildet, in praktischen Umsetzungen der Erfindung ist diese Notrufzentrale als ein weiteres Datenendgerät ausgebildet.

Jedes der Datenendgeräte E1, E2, E3, (sie stellen jeweils eine Notrufsäule dar) ist mit jeweils einer Transportsteueranwendung T1, T2, T3 ausgestattet. Diesen Transportsteueranwendungen T1, T2, T3 sind jeweils zwei Schnittstellen S1a, S1b; S2a, S2b; S3a, S3b zugeordnet. Jede Schnittstelle jedes Datenendgeräts ist mit einer Schnittstelle eines weiteren Datenendgeräts mittels jeweils eines Transportkanals K1, K2, K3, im Allgemeinen einer Kabelverbindung, verbunden. Diese Anordnung von Datenendgeräten und Transportkanälen bildet ein Ringnetz.

In einem Datenendgerät E1 ist eine Dienstanwendung A1 installiert, welche mit der Transportsteueranwendung des Datenendgeräts T1 mittels des ersten Transportprotokolls P Daten überträgt. Diese Transportsteueranwendung T1 setzt das erste Transportprotokoll P in das zweite Transportprotokoll um, wobei die Steuer- und Adressierungsinformationen H1 des ersten Transportprotokolls P beim Aufbau einer Verbindung als Nutzdaten des zweiten Transportprotokolls übertragen werden.

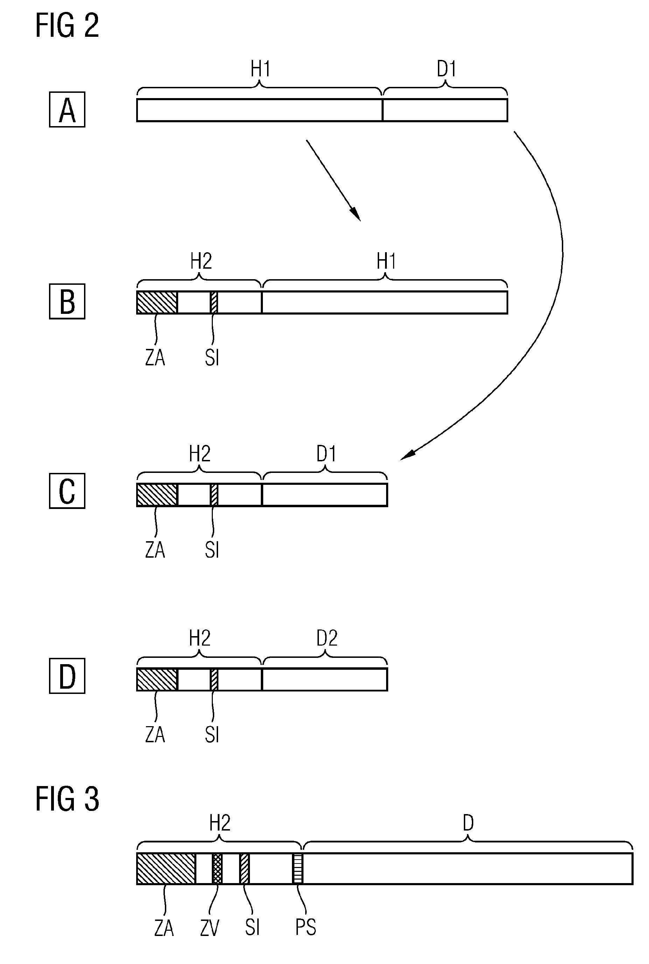

**Fig. 2** zeigt die beispielhaft und schematisch den Ablauf des zweiten Transportprotokolls in 4 Schritten A, B, C, D.

In Schritt A wird ein Datenwort von einer Dienstanwendung A an eine Transportsteueranwendung T gesandt.

Dieses Datenwort ist gemäß den Vorgaben des ersten Transportprotokolls P aufgebaut und besteht aus einer Steuer- und Adressierungsinformation H1, welche unter anderem Informationen über den gewünschten Adressaten (Zieladresse) dieses Datenworts enthält, und Nutzdaten D1. In diesem Beispiel sind die Mengen an enthaltenen Nutzdaten deutlich geringer als die Mengen an Steuer- und Adressierungsinformationen, wie es besonders bei der Sprachdatenübertragung mittels Internet Protokoll als erstes Transportprotokolls auftritt.

In Schritt B erfolgt die Erstellung eines, gemäß den Vorgaben des zweiten Transportprotokolls aufgebauten Datenworts durch die Transportsteueranwendung T. Dieses in Schritt B erstellte Datenwort wird bei dem Aufbau einer Verbindung zu einer Dienstanwendung auf einem anderen Datenendgerät ein Mal der Transportsteueranwendung T des empfangenden Datenendgeräts zugestellt.
Die Steuer- und Adressierungsinformation H1 des ersten Transportprotokolls wird von der Transportsteueranwendung T in den Nutzdatenteil des Datenworts gemäß dem zweiten Transportprotokoll eingefügt. In der Steuer- und Adressierungsinformation dieses Datenworts wird von der Transportsteueranwendung T der Teil der Steuerinformation SI auf einen bestimmten Wert gesetzt, welcher der Transportsteueranwendung T im empfangenden Datenendgerät E anzeigt, das die in diesem Datenwort enthaltene Nutzinformation die Steuer- und Adressierungsinformation des Datenworts des ersten Transportprotokolls ist. Weiters enthält dieses Datenwort gemäß dem zweiten Transportprotokoll die Zieladresse ZA, welche von der Transportsteueranwendung T aus der Steuer- und Adressierungsinformation H1 des ersten Transportprotokolls entnommen und in das Datenwort des zweiten Transportprotokolls eingefügt wird.

In Schritt C erfolgt die Erstellung eines, gemäß den Vorgaben des zweiten Transportprotokolls aufgebauten Datenworts durch die Transportsteueranwendung T. Dieses in Schritt C erstellte Datenwort wird während einer Verbindung zu einer Dienstanwendung A auf einem anderen Datenendgerät E der Transportsteueranwendung T des empfangenden Datenendgeräts zugestellt.
Dabei werden die Nutzdaten D1, welche im Datenwort des ersten Transportprotokoll P enthalten sind und in Schritt A an die Transportsteueranwendung T übertragen wurden, von der Transportsteueranwendung T in den Nutzdatenteil des Datenworts gemäß dem zweiten Transportprotokoll eingefügt. In der Steuer- und Adressierungsinformation dieses Datenworts wird von der Transportsteueranwendung T der Teil Steuerinformation SI auf einen bestimmten Wert gesetzt, welcher der Transportsteueranwendung T im empfangenden Datenendgerät E anzeigt, dass die in diesem Datenwort enthaltene Nutzinformation die Nutzdaten D1 des Datenworts des ersten Transportprotokolls sind. Weiters enthält dieses Datenwort gemäß dem zweiten Transportprotokoll die Zieladresse ZA, welche von der Transportsteueranwendung T aus der Steuer- und Adressierungsinformation H1 des ersten Transportprotokolls entnommen und in das Datenwort des zweiten Transportprotokolls eingefügt wird.

In Schritt D wird ein weiteres Datenwort gemäß dem zweiten Transportprotokoll während einer Verbindung zu einem anderen Datenendgerät erstellt, wobei Nutzdaten D2, welche von der Transportsteueranwendung T einem Datenwort gemäß dem ersten Transportprotokoll entnommen wurden, übertragen werden. Dieser Schritt D wird so lange wiederholt, bis von der Dienstanwendung A keine Daten mehr zu einer anderen Dienstanwendung auf einem anderen Datenendgerät abgesandt werden.

**Fig. 3** zeigt beispielhaft und schematisch den Aufbau eines Datenworts gemäß des zweiten Transportprotokolls. Das Datenwort besteht aus dem Teil Steuer- und Adressierungsinformation H2 und den Nutzdaten D. Der Teil Steuer- und Adressierungsinformation H2 gliedert sich in die Zieladresse ZA, die Steuerinformation SI, die Prüfsumme PS, die Zählvariable ZV und weitere Teile, welche von konkreten Umsetzungen des erfindungsgemäßen Verfahrens definiert werden.

### Liste der Bezeichnungen

- E, E1, E2, E3: Datenendgerät(e)
- A, A1, A2, A3: Dienstanwendung(en)
- T, T1, T2, T3: Transportsteueranwendung(en)
- S1a, S1b: Schnittstelle(n)
- S2a, S2b S3a, S3b P: Transportprotokoll
- K, K1, K2, K3: Transportkanal
- H1: Steuer- und Adressierungsinformation eines Datenworts gemäß dem ersten Transportprotokoll
- D: Nutzdaten eines Datenworts gemäß dem zweiten Transportprotokoll
- D1: Nutzdaten eines Datenworts gemäß dem ersten Transportprotokoll
- H2: Steuer- und Adressierungsinformation eines Datenworts gemäß dem zweiten Transportprotokoll
- D2: Nutzdaten eines Datenworts gemäß dem zweiten Transportprotokoll
- ZA: Zieladresse
- SI: Steuerinformation
- ZV: Zählvariable
- PS: Prüfsumme

## Patentansprüche

1. Verfahren zur Übertragung von Daten in einem paketorientierten Datenübertragungsnetz, bestehend aus mindestens zwei Datenendgeräten (E), wobei innerhalb der Datenendgeräte (E) eine Datenübertragung zwischen zumindest einer Dienstanwendung (A) und zumindest einer Transportsteueranwendung (T) mittels eines ersten Transportprotokolls (P) geschieht,
**dadurch gekennzeichnet, dass** beim Aufbau einer Datenverbindung zwischen zwei Datenendgeräten (E) ein zweites Transportprotokoll verwendet wird, bei dem die Steuer- und Adressierungsinformation (H1) des ersten Transportprotokolls in einem ersten Datenpaket als Nutzdaten übertragen werden und bei der Übertragung von weiteren Datenpaketen als Nutzdaten nur die Anwendungsdaten (D1) des ersten Transportprotokolls übertragen werden und dass im jeweils empfangenden Datenendgerät (E) aus der im Nutzdatenteil des zweiten Transportprotokolls enthaltenen Steuer- und Adressierungsinformation (H1) des ersten Transportprotokolls und den danach empfangenen Anwendungsdaten (D1) des ersten Transportprotokolls jeweils für das erste Transportprotokoll (P) passende Datenpakete erstellt werden.

2. Verfahren gemäß Anspruch 1, **dadurch gekennzeichnet, dass** die folgenden Schritte umfasst sind:
a. Übertragen eines ersten Datenpakets, bestehend aus der Steuer- und Adressierungsinformation (H1) des ersten Transportprotokolls sowie den Anwendungsdaten (D1) von einer Anwendung (A1) in einem Datenendgerät (E) an die Transportsteuerlogik (T) dieses Datenendgeräts (E).
b. Erstellen eines Datenpakets für die Datenübertragung über den Übertragungskanal (K), mindestens bestehend aus der Zieladresse (ZA) des gewünschten anderen Datenendgeräts (E) und der Information (SI), ob die unmittelbar folgenden Nutzdaten (D) die Steuer- und Adressierungsinformation (H1) des übergeordneten Transportprotokolls (P) oder die Anwendungsdaten (D1) darstellen und Nutzdaten, wobei
- bei Aufbau einer Verbindung zu einem anderen Datenendgerät (E) die Steuer- und Adressierungsinformation des ersten Transportprotokolls (P) als Nutzdaten in das Datenpaket eingefügt werden und
- bei allen weiteren Übertragungen dieser Verbindung nur die Anwendungsdaten (D) als Nutzdaten in das Datenpaket eingefügt werden
c. Übertragen des solcherart erstellten Datenpakets an das andere Datenendgerät (E),
d. Empfangen und analysieren des empfangenen Datenpaketes durch die Transportsteueranwendung (T) des anderen Datenendgeräts wobei im Fall, dass das Datenpaket eine Steuer- und Adressierungsinformation (H1) des ersten Transportprotokolls (P) enthält, diese Steuer- und Adressierungsinformation (H1) gespeichert wird
e. Erstellen von Datenpaketen durch die Transportsteueranwendung (T) des empfangenden Datenendgeräts (E), wobei diese Datenpakete der Syntax des ersten Transportprotokolls (P) entsprechen und aus der gespeicherten Steuer- und Adressierungsinformation (H1) sowie den in weiteren empfangenen Datenpakten als Nutzdaten übertragenen Anwendungsdaten (D) gebildet sind.

3. Steuerschaltung, welche zur Durchführung eines Verfahrens gemäß Anspruch 2 eingerichtet ist, **dadurch gekennzeichnet, dass** in einem Datenendgerät (E) eine Transportsteuerlogik eingefügt ist, umfassend Mechanismen welche
- die von einer Anwendung (A) in diesem Datenendgerät (E) stammenden Datenpakete, bestehend aus der Steuer- und Adressierungsinformation (H1) des ersten Transportprotokolls sowie den Anwendungsdaten (D1) speichern und analysieren, und
- Datenpakete für die Datenübertragung über den Übertragungskanal (K), mindestens bestehend aus der Zieladresse (ZA) eines gewünschten anderen Datenendgeräts (E) und der Information (SI), ob die unmittelbar folgenden Nutzdaten (D) die Steuer- und Adressierungsinformation (H1) des übergeordneten Transportprotokolls (P) oder die Anwendungsdaten (D1) darstellen und Nutzdaten erstellen, wobei bei Aufbau einer Verbindung zu einem anderen Datenendgerät (E) die Steuer- und Adressierungsinformation des ersten Transportprotokolls (P) als Nutzdaten in das Datenpaket eingefügt werden und bei allen weiteren Übertragungen dieser Verbindung nur die Anwendungsdaten (D) als Nutzdaten in das Datenpaket eingefügt werden, und
- diese erstellten Datenwörter an Schnittstellenanwendungen weiterleiten, und
- von diesen Schnittstellenanwendungen Datenwörter empfangen, speichern und analysieren können, und
- aus diesen empfangenen Datenwörtern andere Datenwörter, welche nach den Regeln des ersten Transportprotokolls (P) aufgebaut sind, erstellen können, und
- diese, nach den Regeln eines ersten Transportprotokolls (P) aufgebauten Datenwörter an die in der Zieladresse (ZA) definierte Dienstanwendung übertragen.

4. Verfahren nach Anspruch 1, **dadurch gekennzeichnet, dass** das erste Transportprotokoll (P) das Internet Protokoll ist.

5. Verfahren nach Anspruch 1, **dadurch gekennzeichnet, dass** die Steuerungsinformation (H2) des zweiten Transportprotokolls eine Prüfsumme über den Inhalt dieser Steuerungsinformation enthält.

6. Verfahren nach Anspruch 1, **dadurch gekennzeichnet, dass** die Datenendgeräte (E) als Ringnetz angeordnet sind und die Steuerungsinformation (H2) des Transportprotokolls eine Zählvariable (ZV) enthält, welche im Fall, dass ein empfangenes Datenpaket als für ein anderes Datenendgerät bestimmt erkannt wird, diese Zählvariable (ZV) dekrementiert und in dieses Datenpaket wieder eingefügt wird und das so veränderte Datenpaket an das nächste Datenendgerät übertragen wird und ein Datenendgerät ein Datenpaket verwirft, sobald die Zählvariable (ZV) einen bestimmten Wert erreicht.
